# EUROPEAN PATENT SPECIFICATION

(11) **EP 2 557 965 B1**
(45) Date of publication and mention of the grant of the patent: **19.11.2014**
(21) Application number: 11722495.6
(22) Date of filing: 25.03.2011
(51) Int. Cl.: A47B 88/20, A47B 88/00, A47B 57/22

(54) **A SYSTEM FOR THE CONSTRUCTION AND ASSEMBLING OF SHELVING STRUCTURE, PARTICULARLY FOR FITTING INSIDE OUTFITTED COMMERCIAL VANS**
SYSTEM ZUR KONSTRUKTION UND MONTAGE EINER REGALSTRUKTUR, INSBESONDERE ZUR EINPASSUNG IN AUSGESTATTETE KLEINTRANSPORTER
SYSTÈME POUR LA CONSTRUCTION ET L'ASSEMBLAGE D'UNE STRUCTURE D'ÉTAGÈRE, EN PARTICULIER POUR L'ADAPTATION À L'INTÉRIEUR DE CAMIONNETTES COMMERCIALES ÉQUIPÉES

(30) Priority: 14.04.2010 IT MO20100112
(43) Date of publication of application: 20.02.2013
(73) Proprietor: Gema S.r.l., 40121 Bologna (IT)
(72) Inventor: MASSIMO, Maria, Caccia, I-48123 Ravenna (IT)
(74) Representative: Ciapetti, Emilio
(86) International application number: PCT/IB2011/000643
(87) International publication number: WO 2011/128735

(56) References cited:
- DE-A1-102008 057 071
- US-A- 2 102 437

## Description

### DESCRIPTION OF THE INVENTION

The present invention relates to shelving structures, in particular for inside fitting of commercial vehicles with facilities. In particular, the present invention concerns a tray containing element according to claim 1 aimed at being mounted in one of these shelving structures.

It is known that the van fitting constitutes an essential element for professionals who are itinerant workers, who therefore need to fit a vehicle, usually a van or a suitably configured motor car, so as to replace their usual working environments in the best possible way.

In addition, or alternatively, the so fitted van must allow to transport articles specific for the work of professionals in question, such as spare parts, accessories, equipment and tools of common use, necessary to work easily, efficaciously and rapidly.

A set of components, such as chests of drawers, trays, containers and other similar elements and fittings such as indicated in US 2102437, allow a commercially available van to be transformed in an efficient moving workshop, provided with a well-stocked magazine.

With van inside fittings, artisans and maintenance men of various kinds, such as electricians, plumbers, painters can transport large quantities of material, in a safe and tidy way, and organize their work efficiently and easily.

These components are supported by suitable shelves provided with a series of devices aimed at reducing noise and vibration. In general, the base elements stand on rubber rugs, while the chests of drawers and trays are provided with separators, which prevent the articles contained therein from accumulating noisily in correspondence to one side. Besides the more functional subdivision of the articles, these devices also prevent them from mixing.

In general, all the various components of the system and the material being transported must be well blocked, so as to assure the structure strength not only during the normal movement caused by the journey, but also in case of impacts, to which the van is subjected due to the uneven road or ground, on which it moves.

Moreover, the structures must bear impacts caused by possible collisions with obstacles or other vehicles, all this assuring also the safety of who is inside the van.

In this connection, there is a test known as 50 km/h Crash Test, that such structures must pass in accordance with the current regulations, during which the van is subjected to an impact caused by an imaginary collision occurred at this speed. Consequently, since they must support and keep all the other elements in their positions in various journey conditions, the shelves for vans are an important, if not the most important, component of the system, which be discussed later on.

Taking into consideration also the torsional and longitudinal bending, to which the van structure is subjected during its movement, it is obvious that the shelves must be adaptable both in terms of relative flexibility and in terms of blocking to various points of the van. Actually, the anchorages must allow a certain shelving flexibility, yet preventing it from detaching from the van inner surfaces.

Finally, all this must not impede the need to reduce the structure weight, to the advantage of bigger load possibilities and remaining in any case within the law. Consequently, it results obvious that even a minimum weight saving becomes precious in this context. Taking into consideration the big number of components involved in the structure fittings, it is deduced that even few grams for each of them result in considerable weight reduction on the whole.

Finally, an important parameter that characterizes the fittings of commercial vehicles is constituted by the time necessary to assemble the shelves and various components, which causes the non-use of the vehicles and therefore has an obvious negative influence on the professional's work from the economic point of view.

In practice, almost universally, one resorts to modular systems, constructed in various ways and according to various philosophies. Generally, the various elements, trays, chests of drawers, etc. are produced according to series of different combinations of height and length and depth, so as to adapt the shelving conformation to the vans different forms and dimensions.

In particular, it is necessary to adapt the structure depth, from the base to the top, to the curved form of the van wall, generally with decreasing depth. In many cases it is necessary to adapt the structure to the protuberances of the van inner walls, for example in correspondence to backstays or strengthening uprights, attachment points and anchorages for the van parts and not the last, the wheel housings. The latter are often hidden by wheel housing covers, which, mounted on the wheel housings, constitute the base for the installation of other elements above them, but in this way, they cause the loss of considerable spaces which cannot be used or are used in a non orderly or functional way.

The most often adapted solutions include elements formed of sections of steel sheet, previously cut to measure and then shaped by cold molding, welded or bolted one to another so as to form trays, chests of drawers, etc.

According to a first known solution, the elements include sides, which are higher with respect to the actual height of the elements, so as to stack the elements fastening the sides of the lower elements to the sides of the higher elements and then to the van wall.

On the other hand, according to another solution, the already completed elements are fastened by their sides to the support uprights, fastened in turn to the van walls.

The uprights, in the latter case like the sides in the previous one, have a double function: to support the elements and to give them the necessary rigidity, providing strength to the structure on the whole.

However, the known solutions present a series of drawbacks and disadvantages, described in the following.

The main disadvantages derive from the material being used, steel sheet, whose use is imposed by the construction technique of the elements and supports.

One of them relates to the structure excessive weight, caused by the materials, in particular the steel sheet, used for the elements, walls and bottom, as well as steel sections used for the support uprights, also the processing techniques determine increase of weight, for example the edges of the elements walls are molded in box-like form to give rigidity.

The use of steel sheet causes also the necessity of additional protection processing, such as painting and other surfaces protection operations, which further increase the structure weight, but influencing mainly the production costs, already high due to different processing steps.

In conclusion, the elements must be cut to measure, molded, surface treated, often with complex and time consuming procedures, considering the forms, for example, by dip painting, mounted and then connected to the uprights, so as to form the whole structure.

Besides the time extension caused by the paint drying, the painting causes also pollution problems, as well as problems related to the disposal of the materials when the structure is not used any longer.

Another drawback, still caused by the used materials and technologies, relates to the poor versatility of the modular configuration. The rigidly defined forms make it necessary to provide different sets of dimension combinations, considering also the structure necessary adaptability to the inner conformation of the van walls. Therefore, there is the need for large magazines for containing a number of different elements, which is big enough to satisfy various configuration requirements.

This brings about a considerable increase of the supplies handling costs and consequently, of the vans fitting. Furthermore, the elements poor adaptability, which suffers also from the necessity to make the number of components as small as possible, leads to an insufficient exploitation of the van space.

Also the elements assembling influences negatively the costs, in the light of the time necessary for such operations, carried out in an artisan way with a high number of complicated actions, often including placing and screwing of screws and nuts.

Therefore, the time necessary for the van fitting becomes long, due to both the necessity of complex operations of adaptation to the structures and to the frequent lack of elements that make them up, as well as to the assembling complexity.

Also the transport of the elements obtained according to the prior art results influenced by the drawbacks and disadvantages, since the elements are supplied already mounted, and consequently, they are bulky to transport, but most of all, they are very heavy, which affects the transport costs in a considerable way.

Consequently, there is the need to define a structure that can be produced and mounted according to a system which does not feature the drawbacks and disadvantages listed previously, or in which such drawbacks and disadvantages are considerably mitigated.

The object of the present invention is to propose a system for producing and assembling shelving structures, in particular, but not exclusively, for inside fitting of commercial vans with facilities, such that the structures elements are light, simple and rapid to mount and to join, so as to form the structure, easy to adapt to the most varied forms of inner walls of vans of different car makers and different models.

Another object of the present invention is to propose a system as said before, in which a smaller number of components and elements is sufficient to obtain the structure.

A further object of the present invention is to propose a system as said before, whose components are produced with light materials and rapid techniques, which do not require additional processing steps, for example for the surface protection and which are ecologically acceptable and/or advantageous.

A still further object of the present invention is to obtain a substantial economical advantage from the realization of the above mentioned objects, with positive influence on the production and installation costs of the van fitting structures, in addition to a substantial reduction of fitting time, obtained in virtue of shorter operational times and possibility to have all the components always available, in virtue of smaller storage spaces required.

The details of one or more embodiments are set forth in the enclosed drawings and the following description. Other characteristics and objects will become evident from the description and drawings, in which:

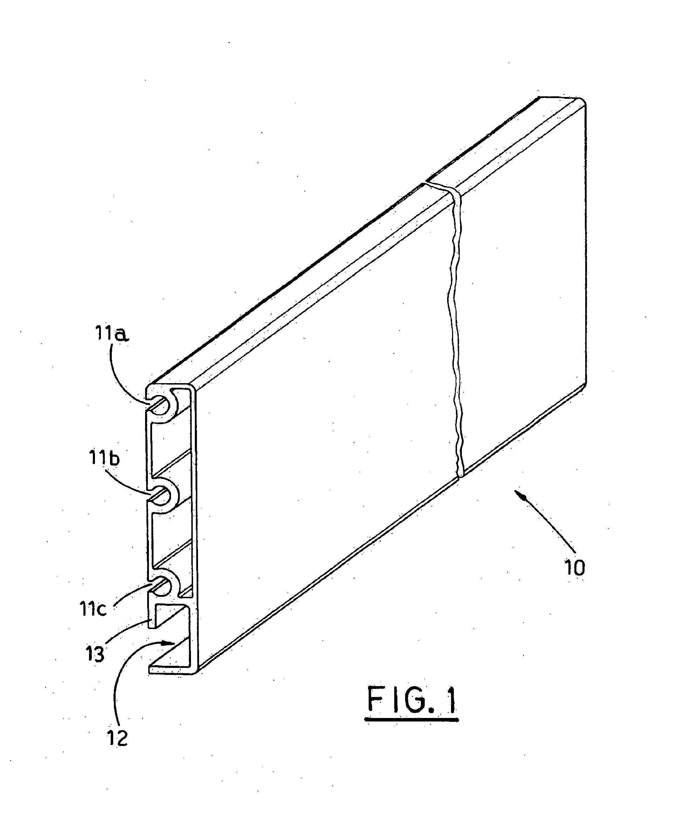

Figure 1 is a fragmentary perspective view of an aluminium extruded channel element which constitutes the base component of the elements for obtaining the structure under discussion;

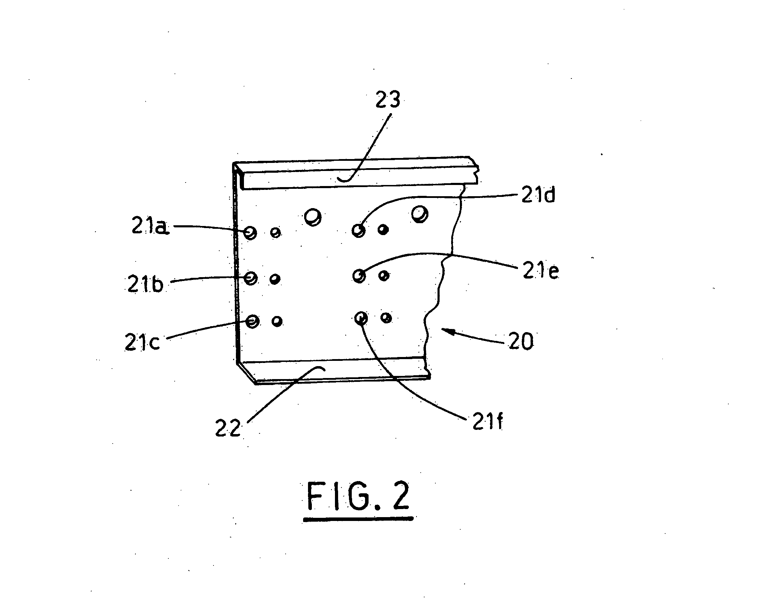

Figure 2 is a fragmentary perspective view of a molded element of aluminium sheet which completes the extruded component of Figure 1 for obtaining the structure under discussion;
Figures 3a, 3b, 3c show schematically three steps of the assembling of one element, in particular a tray, in its simplest form, with one detail in enlarged scale;
Figure 4 illustrates schematically the element of Figures 3a, 3b, 3c in a more complicated form thereof;
Figures 5a, 5b, 5c illustrate in an exemplifying schematic way three steps of the assembling of the element of the previous Figures with a relative support element.

The system for the construction and assembling of shelving structures, in particular for fitting the van inside, proposed by the present invention, is provided, in particular, for inside fitting structures of commercial vehicles, such as vans or motor cars with a covered body.

However, it is understood that the technical solutions proposed by the present invention can be applied also in other fields and in other structures having different configuration, without departing from the protection scope given to the present invention.

With reference to the above mentioned figures, the fitting structures, in which the present technical solution is integrated, include containing elements in the form of a tray and/or drawer elements 1, fastened to the support elements 30, 31. Other elements can be associated to the support elements, but they will not be taken into consideration, since they are not relevant to the matter of the invention.

Likewise, the drawer elements are not mentioned any more in the following, since not pertaining to the specific invention of the present application; on the other hand, they constitute the subject of a corresponding patent application filed on the same day by the Applicant.

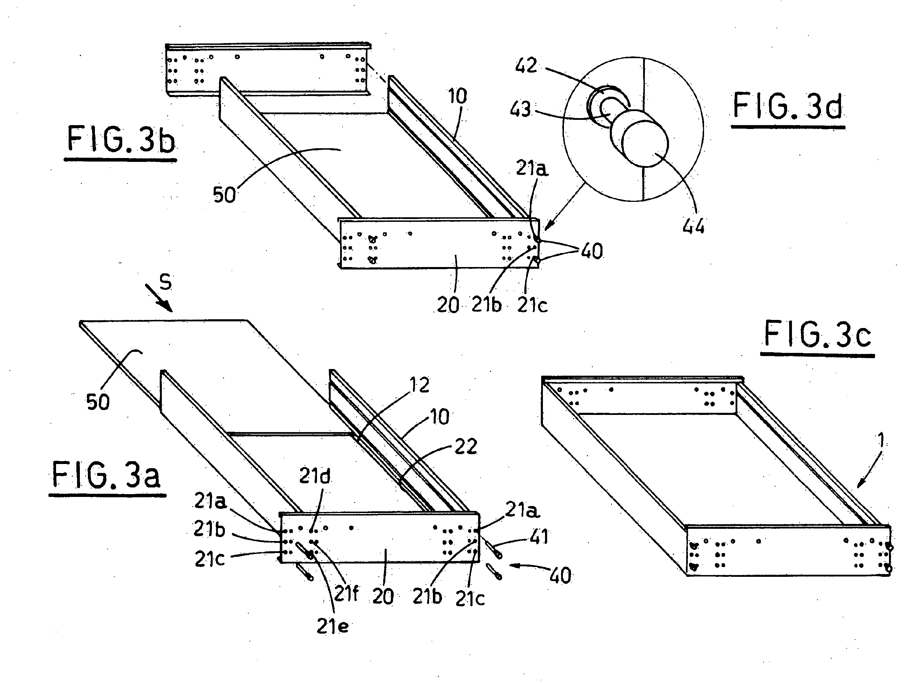

The containing element 1, or as reported briefly in the following, the tray element 1 is formed, in general, by two channel elements 10, two metal sheet press-molded elements 20, and at least one bottom element 50, as it can be seen in Figures 3a, 3b, 3c.

The tray elements 1 are then associated to the support elements 30, 31, having different widths, that are formed by structures, for example of aluminium, preferably in the form of frame, having fastening holes made along the relative vertical sides, preferably formed by interlocking slots 33 with the upper end widened, whose function is described in detail in the following.

Each of the channel elements 10 in aluminium features, made on one of its sides, one or more inner longitudinal grooves 11 a, 11b, 11c, for example 3, and at least one longitudinal edge groove 12. In particular, the edge longitudinal grooves 12 have the open side partially covered by a sledge 13, whose function will become evident later on. The section is preferably obtained by means of extrusion and cut to measure.

It is understood that the number of inner longitudinal grooves can be different than three, as in the illustrative, not limiting example, without departing from the scope of the invention.

One of the two channel elements 10 is aimed at forming the front wall of the tray element, while the second is aimed at forming the back wall of the tray element. Although it has not been illustrated here, the front wall is often lower, so as to allow an easier access to the inside of the tray element, while the back wall is higher, so as to contain better the articles inside the tray element.

Each of the two aluminium sheet press-molded elements 20 is provided with at least one longitudinal folded support edge 22. It is also provided with holes 21 a, 21b, 21c, arranged in crosswise rows and at distances corresponding to the distances between the longitudinal inner grooves 11a, 11b, 11c of the channel elements 10.

Although both press-molded elements 20 are illustrated, only one of them is described, as the other is inversely equal. Thus, the numerical references have been assigned to only one of the press-molded elements, since each of its parts has its exact counterpart in the other one, although with the mirror-like conformation.

The channel elements 10 are joined to the press-molded elements 20 with the latter arranged normal with respect to the channel elements 10, resting on their opposite heads and with the relative longitudinal folded support edges 22 arranged along the longitudinal edge grooves 12.

The joining between them is obtained by fastening means 40, aimed at fastening the metal sheet press-molded elements 20 to the channel elements 10, by means of engagement, by screwing, with the terminal section of the inner longitudinal grooves 11 a, 11 b, 11 c of the channel elements 10.

In particular, the fastening means 40 are formed of self-tapping screws, only some of which are illustrated in the Figures, which therefore allow to assemble the tray element rapidly and simply.

In a more detailed way, each of the fastening screws 40 includes a self-tapping portion 41, aimed at entering, by screwing, a terminal portion of a respective inner longitudinal groove 11a, 11b, 11c of a channel element 10, after having passed through a corresponding hole 21 a, 21 b, 21 c of a press-molded element 20, with respect to which the screw 40 goes in abutment by means of a collar 42 fastened to the self-tapping portion 41.

A stem 43 is fastened to the self-tapping portion 41 and to the collar 42 and ends with a widened head 44, joined thereto, or made integral therewith, on the side opposite to the collar 42.

The widened head, as it will be described later, is aimed at being introduced into the interlocking slots 33 of the support elements 30, 31, to fasten the tray element to the support elements.

The application and clamping of the fastening elements 40 with a tool is made possible by two or more opposite flattenings (not shown), made on the collar 42 or on the stem 41, in a way known to those expert in the field.

As it can be seen in Figure 3a, after a press-molded element 20 has been joined to two channel elements 10, a bottom element 50 is inserted into the edge grooves 12 of the channel elements 10 and rests against the longitudinal folded support edges 22 of the press-molded element 20, joined thereto, by making it slide in the direction S indicated in Figure 3a.

The bottom element is produced in a strong but light material, for example a synthetic plastic material, the so-called "cannulated", which does not have to be treated and is rapidly made ready by cutting to measure. The bottom lightness contributes to the total reduction of the tray element weight and has considerable advantages also as far as its handling, shipping and storing are concerned.

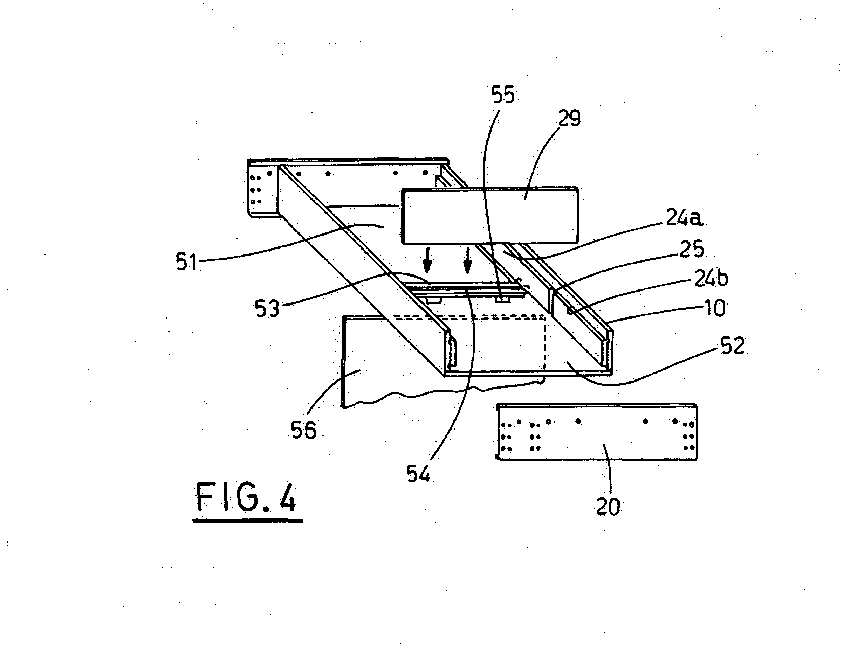

As illustrated in Figure 4, the bottom element 50 can be subdivided in more portions 51, 52, separated one from another by a partition element 53, whose opposite ends have the same thickness as the bottom elements 51, 52 and are introduced into the longitudinal edge grooves 12 of the fore and rear channel elements 10.

This configuration of the tray element bottom has various advantages. A first advantage consists of giving a bigger strength to the bottom, since the partition element is made of a more rigid and stronger material with respect to the bottom. In practice, it is produced from an aluminium press-molded element, having a form of omega, so as to have two opposite folded edges which support the facing heads of the two portions 51, 52.

In particular, in case of trays having bigger length, the interruption of the continuity of the bottom element 50 allows the latter to keep unchanged its flat form, even when it contains articles of some weight.

A second advantage is the reduction of the dimensions of the bottom element, which consequently can be easily transported or shipped, stored and adapted in modular form.

The ends of the partition element 53 are provided with protrusions aimed at introducing into the space covered by the ledge 13 of the channel elements 10. Another function of the partition element 53 is to allow the assembling of a side of another tray element, in practice a press-molded element 20, or of a partition wall 56, likewise of aluminium or synthetic cannulated material.

A further press-molded element, or the partition wall, is applied below the tray element by joining means 55 present on the lower side of the partition element 53 (Figure 4), or by means of screws and nuts associated to the holes made in the latter.

This allows to subdivide the space below the tray element, placing in the so obtained spaces other elements, for example tray or drawer elements, or others.

Finally, as it can be seen in Figure 3b, the second press-molded element 20 is applied to complete the tray element 1 seen in Figure 3c.

The inside of the tray element 1 can be subdivided in more separated sections by a dividing element 29, made for example of the same material that was used for the bottom 50, as seen in Figure 4.

To this end, there are flat "C"-like elements 24, preferably of aluminium sheet, snap-applicable in series to the inside of one or more of the inner longitudinal groove 11 a, 11b, 11c of the channel elements 10, so as to define therebetween the vertical grooves 25, into which the dividing element/s 29 are to be introduced.

The methods of application of the flat "C"-like elements 24 can be different, however each flat "C"-like element 24 preferably presents along each of its longitudinal sides a curved border 27, aimed at allowing the sides to engage with the inside of the inner longitudinal groove 11 a, 11b, 11c.

Therefore, the flat elements 24 are applied with extreme ease and rapidity, causing a limited bending of the same flat elements and introducing their longitudinal sides into the grooves. This expedient causes a considerable reduction of time, and consequently of the costs necessary for the preparation of the tray element.

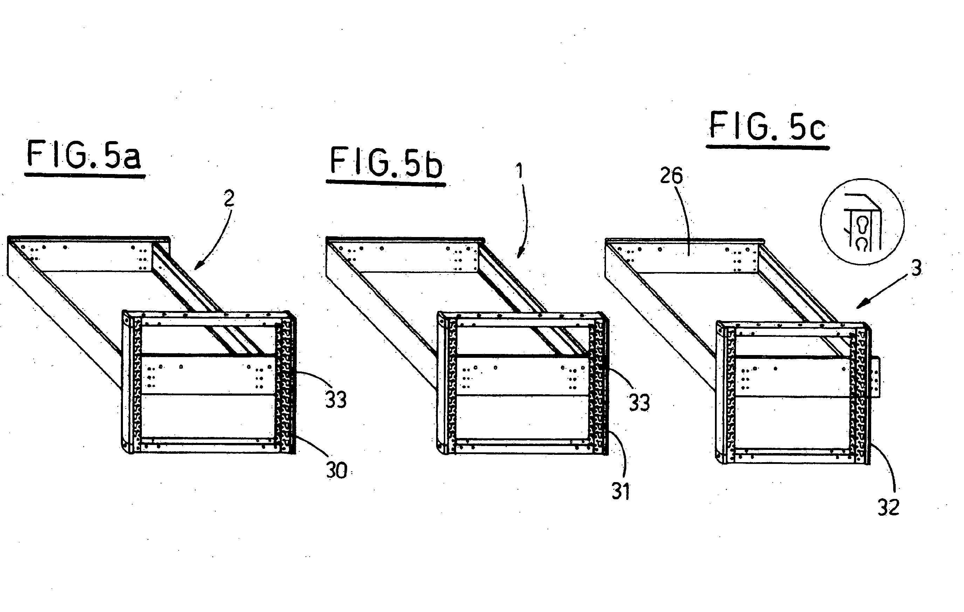

Groups formed by a tray element 1 associated to a support structure element 30, 31, illustrated schematically only in part, can be seen in Figures 5a, 5b, 5c. The groups can be obviously made with different combinations of height and length.

The width of the support elements 30 of Figures 5a and 5b is of the measure that can be defined normal. On the other hand, the elements 31 shown in Figure 5c have smaller width.

In order to assemble the structure formed, among others, by the tray elements 1, it is necessary to associate them with the support elements 30. Also this operation is carried on in an extremely easy and rapid way, simply introducing the widened heads 44 in the upper part of the interlocking slots 33, having bigger width, and moving the tray element downwards, so that the stems of reduced diameter 43 slide along the edges of the interlocking slots constraining the widened heads 44 in the narrower areas of the same slots.

In this case, all the fastening elements 40 coincide with the connection elements and have the form as the one described above.

This configuration can be seen in Figure 5b.

The press-molded elements 20 can have more groups of holes 21a, 21b, 21c, and 21d, 21e, 21f, arranged side by side, which allow to obtain different widths of the tray element 1 by simply changing the position of the rear channel element 10 with respect to the holes. In this way, a narrower tray element 2 is obtained by placing the rear channel element 10 in more inner position and changing the group of holes, through which the fastening screws are introduced, in this case normal self-tapping screws introduced in the holes 21d, 21e, 21f.

The fastening to the support element 30 is made possible by the introduction, into the corresponding holes 21a, 21 b, 21 c, of the screws, whose stem diameter is smaller and the head is widened, screws that are fastened in place by nuts tightened on the free ends of the press-molded elements 20. Therefore, in this case, the connection elements are at least partially different from the fastening elements and from what has been described with reference to the previous cases. Summarizing, the situation described above takes place in correspondence to the front wall, whereas in correspondence to the back wall, the fastening means can be constituted by simple self-tapping screws, available on the market, and the connection means have the widened head 44 and are joined to the tray element 1 by means of nuts.

This configuration can be seen in Figure 5a.

This configuration can be applied to make use of an area inside the van, where the inner wall presents a projection. In this way, it is possible to easily make use of a space usually not usable or usable after laborious and expensive adaptations of the components being used.

In another case, the narrower support elements 31 can be used with a tray element having normal width or with a tray element 3 having bigger width, obtained with longer press-molded elements 26.

This is possible using always the screws mentioned in the previous paragraph, however their placing and the placing of the self-tapping screws is inverted on the press-molded elements 20. This latter configuration is shown in Figure 5c.

In this way, the widest tray element 3 protrudes rearwards inserting itself into a possible recess of the van wall or into its curving.

Therefore, the possibility to mount tray elements having different crosswise dimensions, narrower 2 or wider 3 (Figures 5a and 5c) with respect to the others, allows to adapt the structure to the form of the vehicle inner wall, often rounded. Consequently, each vehicle inner space is functionally used, resulting in the structure bigger usefulness and advantages also from the financial point of view.

In order to further improve the general adaptability of the structure provided with the tray elements under discussion, the fore and rear channel elements, normally supplied already cut to measure, can be supplied in bars. It will be then the installer who will cut the channel elements to measure, according to the vehicle space dimensions.

The advantages of the technical solution proposed by the present invention appear obvious.

Thanks to the use of light and strong materials, such as aluminium and synthetic cannulated material, and to the use of sophisticated production techniques, the obtained shelves for vans are strong and of minimum weight. This allows bigger loading possibilities for the vehicle.

Furthermore, the aluminium sheet can be processed with combined procedures, which allow to cut the elements and to press-mould them in one operation, obtaining the final product. A substantial time reduction which results in cost saving is crucial.

The tray element, as well as other associated elements, is wholly modular and the total structure can be easily assembled depending on the requirements and dimensions of the vehicle space destined thereto. Each narrow gorge can be used. Each wall projection is no longer an obstacle which inevitably prevents placing of the containing element in that point.

The so obtained adaptability and modularity allow the structure to be mounted on a commercial vehicle of any type and any make. It is also possible to make available pre-arranged kits which allow to mount the drawer elements, as well as all the other elements and components of the structure, in the preferred combination.

The wheel housing covers are no longer necessary or they no longer disarrange the structure configuration, which adapts easily to these irregularities of the inner surface of the van walls, allowing to use functionally also these areas.

Another practical advantage is given by the drastic reduction of the number of components necessary to make up the structure, and in particular, the drawer, which allows to have more storage availability using smaller spaces.

This results on the one hand in costs reduction, and on the other hand, in the possibility to supply the required fitting in very reduced time, assuring a rapid assembling and a quick servicing in the fitting centers.

Moreover, the reduced dimensions and weights which are obtained, allow to transport the components in an easy and rapid way, which results in further reduction of costs and time necessary for the structures supply. Finding of possible lacking components can be then quick, without influencing, or influencing in an insignificant measure, on the delivery times.

Another important advantage that derives from the use of materials and techniques as mentioned above, is the absence of processing of components coating, in particular of painting. The absence of the necessity to protect the components of aluminium or synthetic cannulated material results in advantages of economic type (less materials lower processing time) and of ecologic type, since not many toxic materials, such as paints or superficial treatments are used. This advantage takes place also during the components disposal phase, when their use period is finished.

It is also obvious that the considerable saving of time in the van fitting is obtained due to the reduction of time of assembling and adaptation of the shelving structures proposed by the present invention.

Finally, the structure strength remains assured by the materials resistance, obtained due to the processing techniques allowed thereby. The obtained structure resists to the Crash Test at 50 km/h without any problem.

The structure minor weight and its strength improve also the anchorages tightness, thus reducing the situations dangerous for the passengers caused by the detachment of parts or by the material deformation. At the same time, the structure features elasticity that allows it to adapt to the curving of the vehicle body, assuring the anchorages tightness.

## Claims

1. A shelving structure construction and assembling system, particularly for fitting inside vehicles, said structures including a set of containing elements 1 joined to support elements 30, 31, said containing elements 1 each includes:
a plurality of channel elements 10, each one crossed on one side by one or more longitudinal inner grooves 11a, 11b, 11c and by at least one longitudinal edge groove 12;
a plurality of metal sheet press-molded elements 20, each one featuring at least one folded edge 22 and holes 21a, 21b, 21c arranged in crosswise rows and at distances corresponding to distances between said longitudinal inner grooves 11 a, 11 b, 11c of said channel elements;
fastening means 40 designed to pass through at least some of said holes 21a, 21b, 21c of said metal sheet press-molded elements 20, with these latter arranged perpendicularly to the above mentioned channel elements 10, in abutment against opposite ends thereof, and with the related folded edges 22 positioned so as to match with said longitudinal edge grooves 12, and also designed to engage with the end sections of the above mentioned longitudinal inner grooves 11 a, 11 b, 11c of said channel elements 10;
at least one bottom element 50 of the containing element fitted into the edge grooves 12 of the channel elements 10 and resting onto the folded edges 22 of the press-molded elements 20;
connection means for connecting said containing element 1 to related support elements 30.

2. A system according to claim 1, **characterised in that** said fastening means 40 are fastened to said containing element 1 and include each:
a stem 43 joined to a collar 42 designed to go in abutment against a corresponding press-molded element 20;
a widened head 44 joined to, or integral with said stem 43, on the side opposite to said collar 42;
said support elements 30, 31 featuring a series of interlocking slots 33 having a widened end to allow passage therein for said widened heads 44 and to complete connection of the containing elements 1 to the support elements 30, 31 due to sliding movement of the stems 43 and widened heads 44 towards the narrow regions of the respective interlocking slots 33.

3. A system according to claim 2, **characterised in that** said connection elements are joined to the containment element 1 each by means of a self tapping portion 41 adapted to fit by screwing into an end portion of a respective longitudinal inner groove 11 a, 11 b, 11c of a channel element 10, after passing through a corresponding hole 21a, 21b, 21c of a press-molded element 20, onto which said collar 42 abuts, said connection elements thus forming also either at least part of said fastening elements 40 or the whole above mentioned fastening elements 40.

4. A system according to claim 2, **characterised in that:**
a plurality of series of holes 21a, 21b, 21c, 21d, 21e, 21f are made in said press-molded elements 20 in proximity of ends designed to join the channel elements 10, said connection elements are joined to the containment element 1 each by a screw portion, passing through a corresponding hole 21a, 21b, 21c of a first series of holes of the corresponding press-molded element 20, onto which said collar 42 abuts, and fixed by means of a corresponding nut; and said fastening elements consist of self-tapping screws each adapted to fit by screwing into an end portion of a respective longitudinal inner groove 11 a, 11 b, 11c of a respective channel element 10, after passing through a corresponding hole 21d, 21e, 21f of a second series of holes of the corresponding press-molded element 20.

5. A system according to any one of the previous claims, **characterised in that** said support elements 30, 31 include frame-shaped aluminium supports, having said interlocking slots 33 made along vertical sides.

6. A system according to the previous claims, **characterised in that** the bottom element 50 is split in a plurality of portions 51, 52, divided from each other by a partition element 53 having opposite ends fitted inside said longitudinal edge grooves 12.

7. A system according to claim 6, **characterised in that** said longitudinal edge grooves 12 have an open side partly covered by a ledge 13 whereas the ends of said partition element 53 form projections designed to fit into the spaces covered by said ledges 13.

8. A system according to claim 6 or 7, **characterised in that** said partition element 53 features a ledge 54 along the entire length thereof on both sides, for supporting corresponding sides of the portions 51, 52 of the bottom element.

9. A system according to one of claims 6 to 8, **characterised in that** said partition element 53 features on its lower side either joining means 55 or holes for mounting a further press-molded element or a partition wall 56 to apply below the related partition element 53.

10. A system according to any one of the previous claims, **characterised by including** "C" shaped elements which can be snap-fitted in a series into one or more of said inner grooves 11 a, 11b, 11c of said channel elements 10 so as to define vertical grooves 25 between them for inserting therein one or more dividing elements 29.

11. A system according to claim 10, **characterised in that** said press-molded element consists of aluminium sheet and features, beside the folded edge 22, a stiffening double fold 23 along the opposite edge whereas said channel element 10 consists of an aluminium channel obtained by extrusion and cut to measure, which features three longitudinal inner grooves 11a, 11 b, 11 c; said containment element forming a tray 1, entire or divided in a plurality of sections.

## Patentansprüche

1. Ein System zur Konstruktion und Montage einer Regalstruktur, insbesondere zur Eipassung in ausgestattete Kleintransporter, wobei die Regalstruktur einen Satz von Behälterelementen 1, die zu Stützelementen 30, 31 zusammengefügt sind, einschließt, wobei jedes Element 1 Folgendes umfasst
eine Vielzahl von Kanalelementen 10, die jeweils auf einer Seite von einem oder mehreren inneren Längsrillen 11a, 11 b, 11c und mindestens von einer Längskante Rille 12 durchquert werden; eine Vielzahl von Metallblech-Formpresselemente 20, wobei jedes mit zumindest einer gefalteten Längsstützkante 22 und mit Löchern 21a, 21b, 21c, die in Querreihen und in Abständen entsprechend den Abständen zwischen den inneren Längsrillen 11 a, 11 b, 11 c der Kanalelemente angeordnet sind, versehen ist;
Befestigungsmittel 40, die entwickelt, um durch mindestens einigen der Löcher 21a, 21b, 21c des Blechpressformelemente 20 zu passieren sind, wobei die Metallblech-Formpresselemente senkrecht zu den genannten Kanalelemente 10 und in Anlage an entgegengesetzten Enden desselben angeordnet sind, und mit die gefalteten Längsstützkante 22 so angeordnet dass, sie mit den Längskanten Rillen 12 entsprechen, wobei die Befestigungsmittel so ausgebildet sind, dass sie mit den Endabschnitten der genannten inneren Längsrillen 11 a, 11 b, 11 c der Kanalelemente 10 in Eingriff kommen;
mindestens ein Bodenelement 50 des Behälterelements, das in den Längskanten Rillen 12 der Kanalelemente 10 eingebaut wird und auf den gefalteten Längsstützkante 22 der Metallblech-Formpresselemente 20 ruht;
Verbindungsmittel zum Anschluss des Aufnahmeementes 1 an verwandtes Stützelement 30.

2. Ein System gemäß Anspruch 1, **dadurch gekennzeichnet, dass** die Befestigungsmittel 40 an das Behälterelement 1 befestigt sind und jeweils Folgendes enthälten:
einen Stängel 43, der mit einem Bundring 42 verbunden ist, und der entwickelt,
um in Anlage an eines entsprechenden Pressformelement 20 zu gehen wird;
einen verbreiterten Kopf 44, der verbunden oder einstückig mit dem Stängel 43 auf der gegenüberliegenden Seite des Kragens 42 ist;
wobei die Stützelemente 30, 31 mit einer Reihe von ineinandergreifenden Schlitzen 33 vorgesehen sind, mit einem verbreiterten Ende um Durchgang darin für die verbreiterten Köpfe zu erlauben und um die Verbindung der Behälterelemente an den Stützelementen 30, 31, durch eine Gleitbewegung des Stängel 43 und des erweiterten Köpfe 44 in Richtung der schmalen Bereiche der jeweiligen Verriegelungsschlitze 33 zu komplettieren.

3. Ein System gemäß Anspruch 2, **dadurch gekennzeichnet, dass** die Verbindungselemente mit dem Behälterelement 1 jeweils mittels eines selbstschneidenden Abschnitt 41 verbunden ist, das zum Halten durch Einschrauben in einen Endabschnitt einer jeweiligen inneren Längsrille 11a, 11b, 11c eines Kanalelementes 10 geeignet ist, nachdem es ein entsprechendes Loch 21a, 21b, 21c eines Pressformelement 20, an das der Bundring 42 anliegt, durchlaufen hat, wobei die Verbindungselemente ebenfalls entweder zumindest ein Teil der Befestigungselemente 40 oder der ganze Befestigungselemente 40 bilden,

4. Ein System gemäß Anspruch 2, **dadurch gekennzeichnet dass**:
eine Vielzahl von Reihen von Löchern 21a, 21b, 21c, 21d, 21 und 21 f in der Pressformelemente 20 in der Nähe der Enden, die für die Verbindung mit der Kanalelemente 10 gemacht werden, ausgebildet sind, wobei jedes Verbindungselement mit dem Behälterelement 1, durch einen Schraubenabschnitt, der durch ein entsprechendes Loch 21a, 21b, 21c aus einer ersten Reihe von Löchern der entsprechende Pressformelement 20, an das der Bundring 42 anliegt, läuft und der mittels einer entsprechenden Mutter befestigt wird, verbunden ist; und wobei die Befestigungselemente aus selbstschneidenden Schrauben bestehen, jede zum Halten durch Einschrauben in einen Endabschnitt einer jeweiligen inneren Längsrille 11a, 11b 11 c eines Kanalelementes 10 geeignet, nachdem es ein entsprechendes Loch 21d, 21e, 21f aus einer zweiten Reihe von Löchern der entsprechende Pressformelement 20 durchlaufen hat.

5. Ein System gemäß einem der vorhergehenden Ansprüche, **dadurch gekennzeichnet, dass** die Stützelemente 30, 31 ein rahmenförmigen Aluminiumträger enthält, der die ineinandergreifende Schlitzen 33 entlang der vertikalen Seiten aufweist.

6. Ein System gemäß des vorhergehenden Anspruchs, **dadurch gekennzeichnet, dass** das Bodenelement 50 in eine Vielzahl von Abschnitten 51, 52 aufgeteilt ist, die voneinander durch eines Trennelement 53 unterteilt sind, wobei das Trennelement gegenüberliegende Enden im Inneren der Längsrandrillen 12 ausgestattet hat.

7. Ein System gemäß Anspruch 6, **dadurch gekennzeichnet, dass** die Längskante Rille 12 eine offene Seite teilweise gedeckt durch einen Vorsprung 13 haben, während die Enden des Trennelements 53 Auskragungen bilden, die in die durch die Vorsprünge 13 gedeckt Räume einfügen.

8. Ein System gemäß Anspruch 6 oder 7, **dadurch gekennzeichnet, dass** das Trennelement 53 über eine Kante 54, entlang der Länge davon Ganze auf beiden Seiten, zum Tragen entsprechenden Seiten der Abschnitte 51, 52 des Bodenelements verfügt.

9. Ein System gemäß Anspruche 6 bis 8, **dadurch gekennzeichnet, dass** das Trennelement 53 über Verbindungsmittel 55 oder Löcher an ihrer Unterseite zur Befestigung eines weiteren Pressformelements, oder eine Trennwand 56 unterhalb der entsprechenden Verteilungselement 53 gelten, verfügt.

10. Ein System gemäß einem der vorhergehenden Ansprüche, **gekennzeichnet durch** "C" förmigen Elementen, die in einer Reihe in eine oder mehrere der inneren Längsrille 11 a, 11b, 11c der Kanalelemente 10 aufgeschnappt werden, so dass Vertikale Nuten 25 dazwischen zum Einführen eines oder mehrerer Trennelemente 29 darin definiert werden.

11. Ein System gemäß Anspruch 10, **dadurch gekennzeichnet, dass** das Formpresselement aus Aluminiumblech besteht und neben der gefalteten Längsstützkante 22, eine Versteifungsdoppelfalte 23 entlang der gegenüberliegenden Kante verfügt, wobei das Kanalelement 10 aus einem durch Extrusion erhalten und auf Maß geschnitten Aluminiumkanal bestehet, der drei inneren Längsrillen 11a, 11b, 11c aufweist; wobei das Behälterelement einen ganz oder in mehrere Abschnitte unterteilt Behälter 1 bildet.

## Revendications

1. Système pour la construction et l'assemblage d'une structure d'étagère, en particulier pour l'adaptation à l'intérieur de camionnettes commerciales équipées, ladite structure comprenant un ensemble d'éléments contenant 1 reliés avec des éléments de soutien 30, 31, lesdits éléments contenant 1 chacun comprend:
une pluralité d'éléments profilé 10, chacun traversé d'un côté par une ou plusieurs rainures longitudinales intérieures 11a 11b, 11 c et par au moins une rainure longitudinale prévue sur le bord 12; une pluralité d'éléments de presse moulé en tôle métallique 20, chacun pourvu d'au moins un bord plié 22 et comportant des trous 21a, 21b, 21c disposés en rangées transversales, et à des distances correspondant aux distances entre lesdites rainures longitudinales intérieures 11a, 11b, 11c desdits éléments profilés 11;
moyens de fixation 40 conçu pour passer à travers au moins une partie des trous 21a, 21b, 21c desdits éléments de presse moulé en tôle métallique 20, avec ceux-ci disposés perpendiculairement aux éléments profilé 10 mentionnés ci-dessus, en butée contre les extrémités opposées des de ceux-ci, et avec les bord plié 22 positionné de façon à correspondre avec lesdites rainure longitudinale prévue sur le bord 12, et également conçu pour venir en prise avec les sections d'extrémité des rainures longitudinales intérieures précitées 11a, 11b, 11 c desdits éléments profilé 10;
au moins un élément de fond 50 de l'élément contenant monté dans les rainures prévue sur le bord 12 des éléments profilé 10 et reposant sur les bords pliés 22 des éléments de presse moulé 20;
des moyens de connexion pour connecter ledit élément contenant 1 à des éléments de support 30 associés.

2. Système selon la revendication 1, **caractérisé en ce que** lesdites moyens de fixation 40 sont fixés audit élément contenant 1 et comportent chacun;
une tige 43 solidaire d'un collier 42 destiné à aller en butée contre un élément de presse moulé 20 correspondant;
une tête élargie 44 relié à, ou solidaire de ladite tige 43 sur le côté opposé à ladit collier 42;
lesdites éléments de soutien 30, 31 comportant une série des fentes de verrouillage 33 ayant une extrémité élargie pour permettre le passage dans celui-ci dudit tête élargies 44 et pour compléter le raccordement des éléments contenant 1 à les éléments de soutien 30, 31 en raison du déplacement de coulissement de la tige 43 et de la tête élargies 44 vers les régions étroites des fentes de verrouillage respectifs 33.

3. Système selon la revendication 2, **caractérisé en ce que** lesdites éléments de connexion sont reliés avec ledit élément contenant 1 chacun au moyen d'une portion auto-taraudeuse 41, adapté pour s'ajuster par vissage dans une partie d'extrémité d'une respectif rainure longitudinale intérieure 11a, 11b, 11c d'un éléments profilé 10, après le passage à travers un trou correspondant 21a, 21b, 21c d'un élément de presse moulé 20, sur laquelle vient en butée ledit collier 42, lesdits éléments de connexion formant également une ou l'autre au moins une partie desdits éléments de fixation 40 ou l'entiers des éléments de fixation 40 mentionné ci-dessus.

4. Système selon la revendication 2, **caractérisé en ce que**:
une pluralité de séries de trous 21a, 21b, 21c sont réalisés dans lesdits éléments de presse moulés 20 à proximité d'extrémités destinées à joindre les éléments profilés 10, lesdites éléments de connexion sont reliés avec ledit élément contenant 1 chacun au moyen d'une portion auto-taraudeuse, avec le passage à travers un trou correspondant 21a, 21b, 21c d'une première série de trous de l'élément de presse moulé 20 correspondant, sur laquelle vient en butée ledit collier 42, et fixé par des moyens d'un écrou correspondant; et lesdits éléments de fixation sont constitués de vis auto-taraudeuse chacune adaptée pour s'ajuster par vissage dans une partie d'extrémité d'une respectif rainure longitudinale intérieure 11a, 11b, 11c d'un respective élément profilé 10, après le passage à travers un trou correspondant 21d, 21e, 21f d'une deuxième série de trous de l'élément de presse moulé 20 correspondant.

5. Système selon l'une quelconque des revendications précédentes, **caractérisé en ce que** lesdites éléments de soutien 30, 31 comprennent des supports en aluminium en forme de cadre, ayant lesdites fentes de verrouillage réalisés le long des côtés verticaux.

6. Système selon les revendications précédentes, **caractérisé en ce que** l'élément de fond 50 est divisé en une pluralité de parties 51, 52, divisées l'un de l'autre par un élément de séparation 53 ayant des extrémités opposées montées à l'intérieur desdites rainure longitudinale prévue sur le bord 12.

7. Système selon la revendication 6, **caractérisé en ce que** lesdites rainure longitudinale prévue sur le bord 12 comportent un côté ouvert en partie couvert par un rebord 13, tandis que les extrémités desdites élément de séparation 53 forme de saillies destinées à s'insérer dans les espaces couvert par lesdits rebords 13.

8. Système selon la revendication 6 ou 7, **caractérisé en ce que** ledit élément de séparation 53 comporte un rebord 54 le long de la longueur entière de celle-ci sur les deux faces, pour supporter les côtés correspondants des parties 51, 52 de l'élément de fond.

9. Système selon la revendication 6 à 8, **caractérisé en ce que** ledit élément de séparation 53 comporte sur sa face inférieure soit des moyens de jonction 55 ou des trous pour le montage d'autre élément de presse moulé ou une cloison de séparation 56 pour appliquer au-dessous de l'élément de séparation associée 53.

10. Système selon l'une quelconque des revendications précédentes, **caractérisé en ce qu'**il comprend des éléments en forme de "C" applicable par encliquetage d'une série dans une ou plusieurs desdites rainures longitudinales intérieures 11a, 11b, 11c desdits éléments profilé 10, de manière à définir des rainures verticales 25 entre eux pour l'insertion dans celui-ci de un ou plusieurs éléments de séparation 29.

11. Système selon la revendication 10, **caractérisé en ce que** ledit élément de presse-moulé est constitué d'une feuille d'aluminium et comporte, avec les bord plié 22, un double pli de renfort 23 sur le bord opposé, tandis que ledit élément profilé 10 est constitué d'un canal d'aluminium obtenu par extrusion et coupé à la mesure, qui dispose de trois rainures longitudinales intérieures 11a, 11b, 11c; ledit élément contenant formant un plateau 1, entière ou divisée en une pluralité de sections.
